# EUROPÄISCHE PATENTANMELDUNG

(11) **EP 4 610 807 A1**
(43) Veröffentlichungstag der Anmeldung: **03.09.2025**
(21) Anmeldenummer: 25159936.1
(22) Anmeldetag: 25.02.2025
(51) Int. Cl.: G06F 8/35, G06F 8/36, G06F 11/36

(54) **VERFAHREN ZUM TESTEN EINES SUBMODULS EINES MODULSYSTEMS MIT ZUMINDEST ZWEI SUBMODULEN MITTELS EINER ELEKTRONISCHEN RECHENEINRICHTUNG, COMPUTERPROGRAMMPRODUKT, COMPUTERLESBARES SPEICHERMEDIUM SOWIE ELEKTRONISCHE RECHENEINRICHTUNG**

(30) Priorität: 27.02.2024 DE 102024201801
(71) Anmelder: Siemens Aktiengesellschaft, 80333 München (DE)
(72) Erfinder: Albrecht, Christian, 91096 Möhrendorf (DE); Kempter, Bernhard, 80339 München (DE); Rothbauer, Stefan, 86156 Augsburg (DE); Rössler, Wolfgang, 90429 Nürnberg (DE); Sauer, Horst, 80689 München (DE); Sievers, Holger, 91058 Erlangen (DE); Stengel, Christian, 91058 Erlangen (DE)
(74) Vertreter: Siemens Patent Attorneys

(57) **Zusammenfassung**

Die Erfindung betrifft ein Verfahren zum Testen eines Submoduls (10) eines Modulsystems (12) mit zumindest zwei Submodulen (10, 14, 16, 18) mittels einer elektronischen Recheneinrichtung (20), mit den Schritten: Bereitstellen eines das Modulsystem (12) charakterisierenden Plans (22) mittels der elektronischen Recheneinrichtung (20); (S1) Identifizieren des zu testenden Submoduls (10) in Abhängigkeit von dem bereitgestellten Plan (22) mittels der elektronischen Recheneinrichtung (20); (S2) Bestimmen von zumindest einer Schnittstelle (24, 26, 28) des zu testenden Submoduls (10) mit dem weiteren Submodul (14, 16, 18) mittels der elektronischen Recheneinrichtung (20); (S3) Erzeugen von zumindest einem Testsignal (30) für das zu testenden Submodul (10) mittels der elektronischen Recheneinrichtung (20); (S4) und Testen des zu testenden Submoduls (10) in Abhängigkeit von dem Testsignal (30) und der bestimmten Schnittstelle (24, 26, 28) mittels der elektronischen Recheneinrichtung (20). (S5) Ferner betrifft die Erfindung ein Computerprogrammprodukt, ein computerlesbares Speichermedium sowie eine elektronische Recheneinrichtung (20).

## Beschreibung

Die Erfindung betrifft ein Verfahren zum Testen eines Submoduls eines Modulsystems mit zumindest zwei Submodulen mittels einer elektronischen Recheneinrichtung gemäß dem geltenden Patentanspruch 1. Ferner betrifft die Erfindung ein Computerprogrammprodukt, ein computerlesbares Speichermedium sowie eine elektronische Recheneinrichtung.

Aus dem Stand der Technik ist bereits bekannt, dass Tests im Rahmen beispielsweise eines Zugsteuerungssystems eines bestehenden Zugprojekts im Labor durchgeführt werden. Dabei können derzeit keine isolierten Tests von Teilsystemen, zum Beispiel Klimaanlagen, oder Türen durchgeführt werden, da das Teilsystem nicht ohne Interaktionen mit dem Gesamtsystem ausgeführt werden kann.

In den entsprechenden Softwareentwicklungstypen können dabei Probleme auftreten, nämlich beispielsweise bei der Entwicklung eines neuen Projekts. Die sogenannte Big Bang-Integration ist dabei schwierig, da mehrere Teilsysteme von Integrationspartnern die Stabilität des Gesamtsystems beeinträchtigen können. Ferner ist die Wartungsphase problematisch. Wenn Änderungen mehrere Teilsysteme betreffen, sind Regressionstests von Änderungen in einem einzelnen Teilsystem schwierig.

Im Stand der Technik sind bereits Prüfungen bekannt, bei welchen Softwarekomponententests durchgeführt werden. Hierbei werden Softwarekomponenten isoliert getestet. Ferner sind Systemintegrationstests bekannt, bei welchen das Gesamtsystem mit dem Schwerpunkt auf den Anwendungsfällen des Systems getestet wird. Ferner sind Systemtests bekannt, bei welchen das Gesamtsystem als Blackbox getestet wird.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen ein Submodul eines Modulsystems zuverlässig getestet werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Testen eines Submoduls eines Modulsystems mit zumindest zwei Submodulen mittels einer elektronischen Recheneinrichtung. Es erfolgt das Bereitstellen eines das Modulsystem charakterisierenden Plans mittels der elektronischen Recheneinrichtung. Es wird das zu testende Submodul in Abhängigkeit von dem bereitgestellten Plan mittels der elektronischen Recheneinrichtung identifiziert. Es wird zumindest eine Schnittstelle des zu testenden Submoduls mit einem weiteren Submodul mittels der elektronischen Recheneinrichtung bestimmt. Es erfolgt das Erzeugen von zumindest einem Testsignal für das zu testende Submodul mittels der elektronischen Recheneinrichtung und das Testen des zu testenden Submoduls in Abhängigkeit von dem Testsignal und der bestimmten Schnittstelle mittels der elektronischen Recheneinrichtung.

Somit ist ermöglicht, dass auch ein Submodul des Gesamtsystems beziehungsweise des Modulsystems, entsprechend getestet werden kann. Erfindungsgemäß ist vorgesehen, dass auf Basis des charakterisierenden Plans, beispielsweise auf Basis eines Schaltplanes des Modulsystems, das entsprechende Submodul identifiziert wird und sozusagen aus dem Plan entsprechend herausgeschnitten wird. Die zumindest eine Schnittstelle, beispielsweise eine Eingabeschnittstelle oder eine Ausgabeschnittstelle, kann ebenfalls entsprechend bestimmt werden. Auf Basis eines Testsignals, welches beispielsweise an der Eingangsschnittstelle angelegt wird, kann nun das Submodul entsprechend stimuliert werden. Somit ist es ermöglicht, dass zuverlässig das Submodul getestet werden kann.

Insbesondere ermöglicht somit die Erfindung das Testen von Teilsystemen beziehungsweise dem Submodul in Isolation. Dies bietet ein zusätzliches Mittel zum Testen eines Systems an, das zum Beispiel zur Unterstützung von Verifizierungs- und Validierungsaktivitäten, Sicherheitsfällen und Analysen verwendet werden kann. Auf diese Weise können beispielsweise die folgenden zusätzlichen Testebenen effektiv angesprochen werden. Es kann beispielsweise ein Systemintegrationstest sowie ein Teilsystem-Systemtest durchgeführt werden.

Die Lösung basiert dabei auf der Methode, mit der das zu betrachtende Submodul herausgeschnitten wird. Es kann dann angeregt und seine Reaktion an beispielsweise den äußeren Schnittstellen unabhängig von einem bestimmten Projekt beobachtet werden.

Insbesondere bietet somit der erfindungsgemäße Vorschlag die Vorteile, dass eine frühe Prüfung, insbesondere früher im Entwicklungsprozess, durchgeführt werden kann. Des Weiteren kann das Submodul entkoppelt vom Verhalten anderer Teilsysteme getestet werden, insbesondere die im Hinblick auf den Testumfang nicht relevant sind. In späteren Phasen kann beispielsweise auch ein Regressionstest mit einer neuen Version des Submoduls mit vertretbarem Testaufwand durchgeführt werden, da die Methode kein komplettes Labor- und Hardware-Setup einschließlich spezifischer Hardware für alle Teilsysteme innerhalb des Modulsystems für eine entsprechende Anwendung erfordert. Ferner können Tests im Rahmen des grundlegenden Modulsystems möglich sein. Durch die Verwendung dieses Ansatzes muss ein großer Teil der Testergebnisse nicht in spezifische Projekte wiederholt werden.

Die beschriebene Methode unterstützt ferner Verifikations- und Safety-Assurance-Verfahren, insbesondere im Hinblick auf Regressionstests bei Updates von Submodulen beziehungsweise Teilsystemen. Eine neue Version eines Teilsystems kann mit geringerem Aufwand auf Übereinstimmung mit den bisherigen Anforderungen getestet werden.

Insbesondere erfolgt somit für das Verfahren in einer Ausführungsform das Identifizieren des zu testenden Submoduls in Abhängigkeit von dem bereitgestellten Plan, vorzugsweise dem Stromlaufplan, mittels der elektronischen Recheneinrichtung und anschließend ein Deaktivierung der des Weiteren beziehungsweise der weiteren Submodule, um einen Isolationstest für das zu testende Submodul durchführen zu können.

Ferner kann beispielsweise durch das Anlegen des Testsignals an der Schnittstelle eine Beobachtung des Systems durchgeführt werden. Dabei können an der zumindest einen Schnittstelle sowohl Eingangssignale gemessen, aber auch Ausgangssignale erfasst beziehungsweise bestimmt werden. Somit kann mittels der einen Schnittstelle sowohl eine Stimulation des Submoduls als auch eine Beobachtung des Submoduls realisiert werden.

Gemäß einer vorteilhaften Ausgestaltungsform wird die Schnittstelle als Eingangsschnittstelle für das zu testende Submodul bestimmt. Mit anderen Worten kann vorgesehen sein, dass die Schnittstelle dazu ausgebildet ist, entsprechende externe Signale zu empfangen, wobei dann wiederum in Abhängigkeit davon im Submodul diese Signale entsprechend bearbeitet werden können. Somit kann auf Basis des Testsignals die Eingangsschnittstelle des Submoduls entsprechend manipuliert werden, und ein entsprechendes Verhalten des Submoduls getestet werden.

Eine weitere vorteilhafte Ausgestaltungsform sieht vor, dass die Schnittstelle als Ausgangsschnittstelle für das zu testende Submodul bestimmt wird. Insbesondere kann somit beispielsweise vorgesehen sein, dass an der Ausgangsschnittstelle ein entsprechendes Verhalten des Submoduls getestet wird und beispielsweise überprüft werden kann, welche Ausgangssignale an der Ausgangsschnittstelle durch das Submodul erzeugt werden. Dies kann wiederum dazu führen, dass die Ausgangssignale beispielsweise genutzt werden können, um das Verhalten von anderen Submodulen in Abhängigkeit dieser Ausgangssignale zu überprüfen. Somit kann zuverlässig das zu testende Submodul getestet werden.

Es hat sich weiter als vorteilhaft erwiesen, wenn ein Verhalten des Submoduls durch Einbringen des Testsignals in die Eingangsschnittstelle und durch Erfassen eines vom Testsignal abhängigen Verhaltens an der Ausgangsschnittstelle bestimmt wird. Mit anderen Worten weist das Submodul zumindest eine Eingangsschnittstelle und eine Ausgangsschnittstelle auf. Das Testsignal kann an die Eingangsschnittstelle angelegt werden und ein entsprechendes Verhalten an der Ausgangsschnittstelle, beispielsweise durch Erfassen eines Ausgangssignals, bestimmt werden. Somit kann beispielsweise überprüft werden, ob das Submodul sich korrekt verhält. Insbesondere kann hierzu beispielsweise ein Soll-Verhalten vorgegeben werden und mit dem Ist-Verhalten entsprechend verglichen und überprüft werden, ob das Submodul korrekt funktioniert. Sollte beispielsweise das Submodul nicht korrekt funktionieren, so kann ein entsprechendes Warnsignal für einen Nutzer erzeugt werden, sodass ein erneuter Test oder beispielsweise ein Austausch des Submoduls durchzuführen ist.

Weiter vorteilhaft ist, wenn ein Gesamtsystemverhalten des Modulsystems beim Testen berücksichtigt wird. Insbesondere ist das Gesamtsystemverhalten des Modulsystems bekannt. Somit kann an entsprechenden Schnittstellen des Modulsystems ebenfalls mitüberprüft werden, ob beispielsweise bei der Manipulation beziehungsweise beim Testen des Submoduls das Gesamtsystemverhalten entsprechend korrekt durchgeführt wird. Insbesondere können hierzu entsprechende Schwellwerte vorgesehen sein, in welchem sich das Modulsystem zu verhalten hat. Sollten diese Schwellwerte nicht überschritten werden, so kann davon ausgegangen werden, dass beispielsweise das Submodul korrekt funktioniert. Sollten hingegen die entsprechenden Schwellwerte überschritten werden, so kann davon ausgegangen werden, dass das Submodul nicht korrekt funktioniert, und beispielsweise ein Austausch durchzuführen ist.

Es hat sich weiter als vorteilhaft erwiesen, wenn das Gesamtsystemverhalten mit dem getesteten Verhalten verglichen wird. Insbesondere wird das getestete Verhalten des Gesamtsystems, wie bereits erwähnt, mit einem Soll-Verhalten des Gesamtsystems, dem Gesamtsystemverhalten, verglichen. Somit kann überprüft werden, ob das Submodul innerhalb des Gesamtsystems zuverlässig funktioniert und entsprechend anwendbar ist.

In einer weiteren vorteilhaften Ausgestaltungsform ist vorgesehen, dass ein Verhalten eine Hardwarekomponente des zu testenden Submoduls mittels eines mathematischen Modells der Hardwarekomponente bereitgestellt wird. Beispielsweise kann die Hardwarekomponente in Form eines digitalen Modells bereitgestellt werden. Hierzu kann die Hardwarekomponente entsprechend mathematisch beschrieben werden, sodass ein entsprechendes Verhalten der Hardwarekomponente nachsimuliert werden kann. Dadurch ist es ermöglicht, dass auch die Hardwarekomponente neben der Softwarekomponente zuverlässig innerhalb des Submoduls getestet werden kann. Insbesondere kann somit ein Systemverhalten des Submoduls zuverlässig getestet werden.

Eine weitere vorteilhafte Ausgestaltungsform sieht vor, dass der charakterisierende Plan als elektrischer Schaltplan des Modulsystems bereitgestellt wird. Alternativ oder ergänzend kann der Plan auch als mechanischer Plan, als pneumatischer Plan, als fluidischer Plan, als thermischer Plan oder als hydraulischer Plan vorgesehen sein. Somit können die unterschiedlichen Varianten des Subsystems unterschiedlich getestet und entsprechend ein Verhalten des Subsystems bereitgestellt werden. Somit können neben rein elektronischen Subsystemen auch die entsprechenden mechanischen, hydraulischen, pneumatischen oder thermischen Systeme entsprechend modelliert werden.

Ebenfalls vorteilhaft ist, wenn das Modulsystem als eine Fahrzeugsteuerung für ein Kraftfahrzeug bereitgestellt wird. Dabei ist das Kraftfahrzeug insbesondere als Zug ausgebildet. Insbesondere kann somit eine Gesamtfahrzeugsteuerung, beispielsweise bezüglich Klimaanlage, Türen oder dergleichen getestet werden. Insbesondere können diese Submodule dann wiederum entsprechend herausgelöst werden und einzeln getestet werden. Somit kann eine Fahrzeugsteuerung für ein Kraftfahrzeug zuverlässig getestet werden.

In einer weiteren vorteilhaften Ausgestaltungsform ist vorgesehen, dass das zu testende Submodul als zusammengehörige Funktionsgruppe identifiziert wird. Insbesondere kann beispielsweise eine Funktionsgruppe als eine Untergruppe eng miteinander verbundener Elemente auf einer Schaltplanebene definiert werden. Somit ist ermöglicht, dass zuverlässig das Submodul identifiziert werden kann.

In einer weiteren vorteilhaften Ausgestaltungsform ist vorgesehen, dass eine Vielzahl von Testsignalen erzeugt wird und das zu testende Submodul auf Basis der Vielzahl von Testsignalen getestet wird. Insbesondere sind dabei die Testsignale unterschiedlich. Somit können unterschiedliche Systemverhalten des zu testenden Submoduls entsprechend bestimmt werden. Insbesondere können somit auch in zeitlicher Abfolge mehrere aufeinanderfolgende Stimulationen durchgeführt werden, gegebenenfalls abhängig von beobachteten Ergebnissen / Verhalten des Gesamtsystems. Bevorzugt werden statische Testsignale erzeugt. Jedoch können auch dynamische Vorgänge, wie beispielsweise Beschleunigung, Aufladung Zwischenkreis usw., ebenfalls als Testsignale genutzt werden. Somit kann ein umfänglicher Test des Submoduls durchgeführt werden, wodurch die Funktionsfähigkeit des Submoduls detailliert betrachtet und bestimmt werden kann.

Gemäß einer weiteren vorteilhaften Ausgestaltungsform ist vorgesehen, dass eine Auswirkung des mit dem Testsignal beaufschlagten zu testenden Submoduls auf das weitere Submodul bestimmt wird. Insbesondere kann beispielsweise das Testsignal an der Eingangsschnittstelle des zu testenden Submoduls angelegt werden. Es kann dann an der Ausgangsschnittstelle des Submoduls ein entsprechendes Ausgangssignal bestimmt werden. Dieses Ausgangssignal ist wiederum insbesondere zumindest teilweise mit dem weiteren Submodul verbunden. Es wird nun das weitere Submodul auf Basis dieses Ausgangssignals wiederum getestet. Somit können die Auswirkungen des zu testenden Submoduls auf das weitere Submodul entsprechend ebenfalls mitgetestet werden. Somit kann ein Gesamtsystemverhalten des Modulsystems zuverlässig bestimmt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung daher auch ein computerlesbares Speichermedium mit zumindest dem Computerprogrammprodukt nach dem vorherigen Aspekt.

Ein nochmals weiterer Aspekt der Erfindung betrifft eine elektronische Recheneinrichtung zum Testen eines Submoduls eines Modulsystems mit zumindest zwei Submodulen, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Vorteilhafte Ausgestaltungsformen des Verfahrens sind als vorteilhafte Ausgestaltungsformen des Computerprogrammprodukts, des computerlesbaren Speichermediums und der elektronischen Recheneinrichtung anzusehen. Die elektronische Recheneinrichtung weist hierzu insbesondere gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
FIG 1 ein schematisches Ablaufdiagramm gemäß einer Ausführungsform eines Verfahrens;
FIG 2 ein schematisches Blockschaltbild einer Ausführungsform eines Modulsystems;
FIG 3 ein schematisches Blockschaltbild einer Ausführungsform eines zu testenden Submoduls; und
FIG 4 ein schematisches Blockschaltbild gemäß einer Ausführungsform einer Testumgebung mit der elektronischen Recheneinrichtung.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

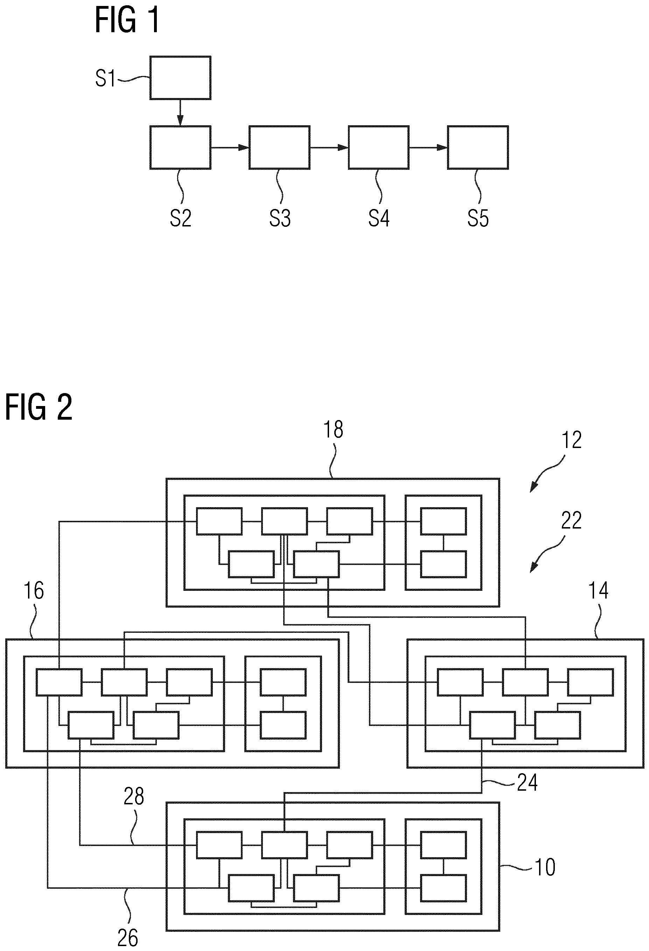

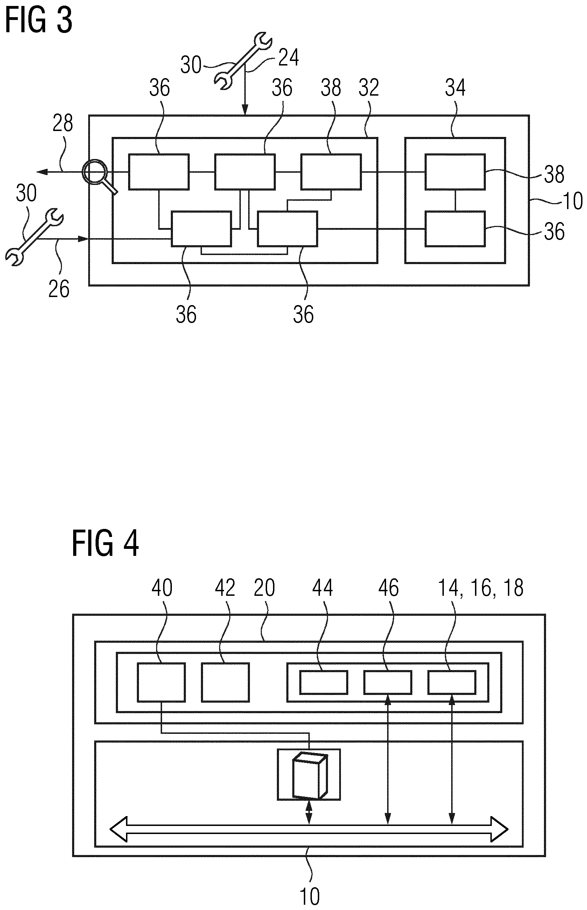

FIG 1 zeigt ein schematisches Ablaufdiagramm gemäß einer Ausführungsform eines Verfahrens zum Testen eines Submoduls 10 (FIG 2) eines Modulsystems 12 (FIG 2) mit zumindest zwei Submodulen 10, 14, 16, 18 (FIG 2) mittels einer elektronischen Recheneinrichtung 20 (FIG 4).

Dabei erfolgt in einem ersten Schritt S1 das Bereitstellen eines das Modulsystem 12 charakterisierenden Plans 22 (FIG 2) mittels der elektronischen Recheneinrichtung 20. In einem zweiten Schritt S2 wird das zu testende Submodul 10 in Abhängigkeit von dem bereitgestellten Plan 22 mittels der elektronischen Recheneinrichtung 20 identifiziert. In einem dritten Schritt S3 erfolgt das Bestimmen von zumindest einer Schnittstelle 24, 26, 28 (FIG 3) des zu testenden Submoduls 10 mit dem weiteren Submodul 14, 16, 18 mittels der elektronischen Recheneinrichtung 20. In einem vierten Schritt S4 wird zumindest ein Testsignal 30 (FIG 3) für das zu testende Submodul 10 mittels der elektronischen Recheneinrichtung 20 erzeugt und in einem fünften Schritt S5 wird das zu testende Submodul 10 in Abhängigkeit von dem Testsignal 30 und der bestimmten Schnittstelle 24, 26, 28 mittels der elektronischen Recheneinrichtung 20 getestet.

Insbesondere zeigt somit die FIG 1 eine Lösung, die das Testen von Teilsystemen, insbesondere dem zu testenden Submodul 10, in Isolation ermöglicht. Dies bietet ein zusätzliches Mittel zum Testen des Gesamt-Modulsystems 12 an, das zum Beispiel zur Unterstützung von Verifizierungs- und Validierungsaktivitäten, Sicherheitsfällen und Analysen verwendet werden kann. Auf diese Weise können beispielsweise die folgenden zusätzlichen Testebenen effektiv angesprochen werden: Teilweise Systemintegrationstest sowie Teilsystem-Systemtests. Die Lösung basiert auf einer Methode, mit der das zu betrachtende beziehungsweise zu testende Submodul 10 herausgeschnitten wird. Es kann dann angeregt und seine Reaktionen an den äußeren Schnittstellen unabhängig von einem bestimmten Projekt beobachtet werden.

Dabei sieht die Erfindung insbesondere vor, dass im zweiten Schritt S2 eine Identifizierung der Funktionsgruppe, die isoliert geprüft werden soll, durchgeführt wird. Insbesondere ist diese Funktionsgruppe wiederum als das zu testende Submodul 10 bezeichnet. Im dritten Schritt S3 erfolgt das Festlegen von Grenzen, insbesondere der Schnittpunkte zur Bestimmung der Schnittstellen 24, 26, 28 der Funktionsgruppe zum Rest des Modulsystems 12, zu Systemmodellen und zur Testumgebung. Dabei können beispielsweise bei entsprechender Hardware innerhalb des zu testenden Submoduls 10 Schaltpläne, die Mechanik, die Hydraulik und die Pneumatik berücksichtigt werden. Ferner kann auch eine entsprechende Software des zu testenden Submoduls 10 berücksichtigt werden. Im vierten Schritt S4 wird die Testumgebung entsprechend mit den festgelegten Schnittstellen 24, 26, 28 eingerichtet, um zum Einen die Stimulation der funktionellen Gruppe, insbesondere für die spezifische Simulation, durchzuführen, genauso wie die Beobachtung der funktionellen Gruppe durchzuführen. Im fünften Schritt S5 erfolgt die Einrichtung und die Durchführung von Tests, wobei diese wiederum insbesondere automatisiert durchgeführt werden können.

FIG 2 zeigt ein schematisches Blockschaltbild gemäß einer Ausführungsform eines Modulsystems 12 mit zumindest dem zu testenden Submodul 10. Ferner weist im vorliegenden Ausführungsbeispiel das Modulsystem 12 ein weiteres erstes Submodul 14, ein weiteres zweites Submodul 16 sowie ein weiteres drittes Submodul 18 auf. Das zu testende Submodul 10 ist dabei insbesondere zumindest mit dem ersten Submodul 14 und dem zweiten Submodul 16 entsprechend verbunden. Dies ist selsbtverständlich nur beispielhaft anzusehen. Beispielsweise kann ein Ausgangssignal des ersten Submoduls 14 als Eingangssignal an der Eingangsschnittstelle 24 des zu testenden Submoduls 10 verbunden sein. Ferner kann das zweite Submodul 16 ein weiteres Eingangssignal für die zweite Eingangsschnittstelle 26 des zu testenden Submoduls 10 aufweisen. Das zu testende Submodul 10 kann wiederum mit einer Ausgangsschnittstelle 28 mit dem zweiten Submodul 16 gekoppelt sein.

Insbesondere zeigt somit die FIG 2, dass der charakterisierende Plan 22 als elektrischer Schaltplan des Modulsystems 12 bereitgestellt werden kann. Im folgenden Ausführungsbeispiel kann insbesondere vorgesehen sein, dass das Modulsystem 12 als eine Fahrzeugsteuerung für ein Kraftfahrzeug, beispielsweise für einen Zug, bereitgestellt wird. Dabei ist ferner in der FIG 2 gezeigt, dass das zu testende Submodul 10 insbesondere als zusammengehörige Funktionsgruppe identifiziert wird. Ferner zeigt die FIG 2, dass beispielsweise dann eine Auswirkung des mit dem Testsignal 30 beaufschlagten zu testenden Submoduls 10 auf das weitere Submodul beziehungsweise die weiteren Submodule 14, 16, 18, bestimmt werden kann.

Insbesondere ist somit vorgesehen, dass beispielsweise die Funktionsgruppe, insbesondere als Teilsystem, entsprechend identifiziert wird. Dabei kann eine Funktionsgruppe als eine Untergruppe eng miteinander verbundener Elemente auf beispielsweise der Schaltplanebene definiert werden.

Der dritte Schritt S3 definiert sich wiederum dadurch, dass das integrierte System einschließlich des Teilsystems im integrierten Zustand wiederum das zu testende Submodul 10 enthält und seine Eingaben von dem System selbst, das aus mehreren anderen Submodulen 14, 16, 18 ausgebildet sein kann, die ebenfalls in das Modulsystem 12 integriert sind, erhält. Das zu testende Submodul 10 liefert dabei Ausgaben über die Ausgangsschnittstelle 28, wobei auch eine Vielzahl von Ausgangsschnittstellen 28 vorgesehen sein kann, an den Rest des integrierten Modulsystems 12. Das zu testende Submodul 10 empfängt Eingaben über die Eingangsschnittstellen 24, 26 vom Rest des integrierten Systems. Je nach spezifischer Funktion eines bestimmten Signals innerhalb des Modulsystems 12 können Ausgangsschnittstellen 28 der auszugliedernden Funktionsgruppe beobachtet und/oder in die Testumgebung eingespeist werden. Jede Eingangsschnittstelle 24, 26 der Funktionsgruppe, die herausgearbeitet beziehungsweise rausgeschnitten werden soll, muss später über die Testumgebung, zum Beispiel das Testautomatisierungsframework, stimuliert werden, mit anderen Worten mit einem Testsignal 30 versehen werden.

FIG 3 zeigt wiederum ein schematisches Blockschaltbild des zu testenden Submoduls 10 gemäß FIG 2. Dabei ist insbesondere gezeigt, dass das zu testende Submodul 10 wiederum aus einem ersten Teilelement 32 und einem zweiten Teilelement 34 ausgebildet sein kann. Dabei kann beispielsweise das erste Teilelement 32 eine Vielzahl von unterschiedlichen Softwarekomponenten 36 sowie Hardwarekomponenten 38 aufweisen. Ferner kann auch das zweite Teilelement 34 unterschiedliche Softwarekomponenten 36 und Hardwarekomponenten 38 aufweisen.

Dabei zeigt die FIG 3 insbesondere, dass die Schnittstelle 24, 26, 28 insbesondere als Eingangsschnittstelle 24, 26 für das testende Submodul 10 bestimmt wird und/oder die Schnittstelle 24, 26, 28 als Ausgangsschnittstelle 28 für das zu testende Submodul 10 bestimmt wird. Dabei kann insbesondere ein Verhalten des zu testenden Submoduls 10 durch Einbringen des Testsignals 30 in die Eingangsschnittstelle 24, 26 und durch Erfassen eines vom Testsignal 30 abhängigen Verhaltens an der Ausgangsschnittstelle 28 bestimmt werden. Ferner kann vorgesehen sein, dass ein Verhalten eine Hardwarekomponente 38 des zu testenden Submoduls 10 mittels eines mathematischen Modells der Hardwarekomponente 38 bereitgestellt wird. Ferner kann vorgesehen sein, dass eine Vielzahl von Testsignalen 30 erzeugt wird und das zu testende Submodul 10 auf Basis der Vielzahl von Testsignalen 30 getestet wird.

Somit ist insbesondere in der FIG 3 gezeigt, dass eine entsprechende Testumgebung derart eingerichtet wird, dass die Ausgangssignale der Funktionsgruppe beziehungsweise zu testenden Submoduls 10 empfangen und die Funktionsgruppe an den entsprechenden Schnittstellen 24, 26, 28 stimuliert werden kann. Da alle Eingangssignale des Submoduls 10 bereitgestellt werden, ist das Submodul 10 voll funktionsfähig und kann getestet werden.

FIG 4 zeigt ein weiteres schematisches Blockschaltbild gemäß einer Ausführungsform einer Testumgebung mit einer elektronischen Recheneinrichtung 20. Dabei ist insbesondere die elektronische Recheneinrichtung 20 vorgesehen, welche zumindest ein Hardwarekontrollmodul 40, eine Schaltplansimulation 42, eine Umgebungssimulation 44, sowie eine Schnittstellenkarte 46 für einen digitalen parallelen Eingang und Ausgang aufweist.

Insbesondere zeigt somit die FIG 4, dass insbesondere ein Gesamtsystemverhalten des Modulsystems 12 beim Testen berücksichtigt wird. Insbesondere kann dabei das Gesamtsystemverhalten mit dem getesteten Verhalten verglichen werden.

Dabei zeigt insbesondere die FIG 4, dass das zu testende Submodul 10 ein Teilsystem ist, das beispielsweise als Teil einer Gesamtanwendung beziehungsweise des Modulsystems 12 eigesetzt wird. Das entsprechende Modulsystem 12 kann ein konkretes Projekt, beispielsweise ein Zugprojekt, oder eine speziell für Testzwecke definierte Vorzugsvariante oder ein Referenzprojekt sein, je nach Testumfang für das zu betrachtende Teilsystem beziehungsweise zu testende Submodul 10. Die entsprechende Umgebung, insbesondere das Modulsystem 12, wird dabei insbesondere als Software bereitgestellt, für deren Ausführung ein Controller benötigt wird.

Die in Hardware realisierten Elemente des Submoduls 10 werden als Schaltplansimulationen nachgebildet. Im Stand der Technik sind lediglich integrierte Schaltpläne für ein ganzes Projekt entsprechend der Anwendung verfügbar. Daher werden diese Schaltpläne an den entsprechenden Schnittstellen 24, 26, 28 der für den Test des Teilsystems relevanten Funktionalität beschnitten werden. Die Eingänge für das Teilsystem, die nach dem Herausschneiden nun "offene Enden" sind, werden über Modelle von Teilsystemen in der Testumgebung oder über spezielle Testwerkzeuge eingespeist. Auf diese Weise ist der Input des zu testenden Submoduls 10 sichergestellt und kann zu einem späteren Zeitpunkt repliziert werden, ohne dass für alle verwendeten Teilsysteme der Anwendung Hardware im Labor aufgebaut werden muss. An den Ausgängen des zu testenden Submoduls 10 werden Schnittstellen zur Verfügung gestellt, um die Reaktionen des zu testenden Submoduls 10 auf die Stimulationen während eines Tests zu beobachten. Damit die Methode anwendbar ist, werden insbesondere die folgenden zwei Voraussetzungen geschaffen. Für jedes zu testende Submodul 10, das isoliert getestet werden soll, wird ein Schaltplan exportiert. Daher wird aus dem Schaltplan des gesamten integrierten Systems dieses herausgeschnitten. Eine Simulation muss explizit für das jeweilige zu testende Submodul erstellt werden. Dies ist mit Aufwand verbunden, sichert aber die Machbarkeit für einen hohen Automatisierungsgrad und einen geringen Aufwand für eine spätere Replikation.

Insbesondere sind in dem in FIG 4 beschriebenen Beispiel die Modelle von elektronischen Schaltkreisen gezeigt, um die Methode zur Ausgliederung einer bestimmten Funktionsgruppe zu veranschaulichen. In gleicher Weise können auch andere Arten von Modellen, zum Beispiel Umgebungsmodelle, mechanische, hydraulische, pneumatische oder thermische Modelle, oder simulierte Modelle spezifische Komponenten oder Submodelle verwendet werden, um die entsprechenden Schnittstellen zu identifizieren, an denen ein Herausschneiden ermöglicht ist.

Zur Initialisierung des Tests wird das gesamte Modulsystem 12 gestartet. Anschließend werden die für den Test nicht benötigen Komponenten mit Hilfe von Infrastruktur-Teilsystemen (Runtime) deaktiviert.

Es wird dann der Test automatisiert, sodass zu einem späteren Zeitpunkt mit beispielsweise einer geänderten Version des zu testenden Submoduls 10 ein Regressionstest durchgeführt werden kann. Die Automatisierung des Tests ermöglicht auch die Stimulierung dynamischer Werte für das zu testende Submodul 10 entweder durch eine Simulation des Testumgebungsmodells oder durch Capture-Replay-Techniken.

Mit diesem Aufbau sind die vorgeschlagenen Testebenen Teilsystem-Integrationstest und Teilsystem-Systemtest möglich über die Stimulation der Eingänge des zu testenden Submoduls 10 in der Simulation mit dem Testautomatisierungssystem sowie die Beobachtung der Ergebnisse auch unter Verwendung des Testautomatisierungssystems.

Diese Schritte können später mit geringem Aufwand wiederholt werden, da die benötigte Hardware überschaubar ist, Simulationen zur Stimulation zur Verfügung stehen und der Prozess weitgehend automatisiert ist.

## Patentansprüche

1. Verfahren zum Testen eines Submoduls (10) eines Modulsystems (12) mit zumindest zwei Submodulen (10, 14, 16, 18) mittels einer elektronischen Recheneinrichtung (20), mit den Schritten:
- Bereitstellen eines das Modulsystem (12) charakterisierenden Plans (22) mittels der elektronischen Recheneinrichtung (20); (S1)
- Identifizieren des zu testenden Submoduls (10) in Abhängigkeit von dem bereitgestellten Plan (22) mittels der elektronischen Recheneinrichtung (20); (S2)
- Bestimmen von zumindest einer Schnittstelle (24, 26, 28) des zu testenden Submoduls (10) mit dem weiteren Submodul (14, 16, 18) mittels der elektronischen Recheneinrichtung (20); (S3)
- Erzeugen von zumindest einem Testsignal (30) für das zu testenden Submodul (10) mittels der elektronischen Recheneinrichtung (20); (S4) und
- Testen des zu testenden Submoduls (10) in Abhängigkeit von dem Testsignal (30) und der bestimmten Schnittstelle (24, 26, 28) mittels der elektronischen Recheneinrichtung (20); (S5).

2. Verfahren nach Anspruch 1, **dadurch gekennzeichnet, dass**
die Schnittstelle (24, 26, 28) als Eingangsschnittstelle (24, 26) für das zu testende Submodul (10) bestimmt wird.

3. Verfahren nach Anspruch 1 oder 2, **dadurch gekennzeichnet, dass**
die Schnittstelle (24, 26, 28) als Ausgangsschnittstelle (28) für das zu testende Submodul (10) bestimmt wird.

4. Verfahren nach Anspruch 2 und 3, **dadurch gekennzeichnet, dass**
ein Verhalten des zu testenden Submoduls (10) durch Einbringen des Testsignals (30) in die Eingangsschnittstelle (24, 26) und durch Erfassen eines vom Testsignal (30) abhängigen Verhaltens an der Ausgangsschnittstelle (28) bestimmt wird.

5. Verfahren nach einem der vorhergehenden Ansprüche, **dadurch gekennzeichnet, dass** ein Gesamtsystemverhalten des Modulsystems (12) beim Testen berücksichtigt wird.

6. Verfahren nach Anspruch 5, **dadurch gekennzeichnet, dass**
das Gesamtsystemverhalten mit dem getesteten Verhalten verglichen wird.

7. Verfahren nach einem der vorhergehenden Ansprüche, **dadurch gekennzeichnet, dass** ein Verhalten einer Hardwarekomponente (38) des zu testenden Submoduls (10) mittels eines mathematischen Modells der Hardwarekomponente (38) bereitgestellt wird.

8. Verfahren nach einem der vorhergehenden Ansprüche, **dadurch gekennzeichnet, dass** der charakterisierende Plan (22) als elektrischer Schaltplan des Modulsystems (12) bereitgestellt wird.

9. Verfahren nach einem der vorhergehenden Ansprüche, **dadurch gekennzeichnet, dass** das Modulsystem (12) als eine Fahrzeugsteuerung für ein Kraftfahrzeug bereitgestellt wird.

10. Verfahren nach einem der vorhergehenden Ansprüche, **dadurch gekennzeichnet, dass** das zu testende Submodul (10) als zusammengehörige Funktionsgruppe identifiziert wird.

11. Verfahren nach einem der vorhergehenden Ansprüche, **dadurch gekennzeichnet, dass** eine Vielzahl von Testsignalen (30) erzeugt wird und das zu testende Submodul (10) auf Basis der Vielzahl von Testsignalen (30) getestet wird.

12. Verfahren nach einem der vorhergehenden Ansprüche, **dadurch gekennzeichnet, dass** eine Auswirkung des mit dem Testsignal (30) beaufschlagten zu testenden Submoduls (10) auf das weitere Submodul (14, 16, 18) bestimmt wird.

13. Computerprogrammprodukt mit Programmcodemitteln, welche eine elektronische Recheneinrichtung (20) dazu veranlassen, wenn die Programmcodemittel von der elektronischen Recheneinrichtung (20) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (20) zum Testen eines Submoduls (10) eines Modulsystems (12) mit zumindest zwei Submodulen (10, 14, 16, 18), wobei die elektronische Recheneinrichtung (20) zum Durchführen eines Verfahrens nach einem der Ansprüche 1 bis 12 ausgebildet ist.
